# EUROPÄISCHE PATENTANMELDUNG

(11) **EP 1 014 170 A2**
(43) Veröffentlichungstag der Anmeldung: **28.06.2000**
(21) Anmeldenummer: 99123973.2
(22) Anmeldetag: 06.12.1999
(51) Int. Cl.: G03B 27/58

(54) **Adapter zur reibschlüssigen Kupplung eines Filmwickels an eine Aufnahmevorrichtung**

(30) Priorität: 17.12.1998 DE 19858339
(71) Anmelder: Agfa-Gevaert AG, 51373 Leverkusen (DE)
(72) Erfinder: Essert, Hermann August, 64807 Dieburg (DE); Mühlbach, Steffen Peter, 63329 Egelsbach (DE)

(57) **Zusammenfassung**

Adapter (1) zur Anpassung einer Filmrolle in Tageslichtverpackung (6).

In Verarbeitungsgeräten für Filmmaterial werden Adapter (1) eingesetzt, die die Tageslichtverpackung (6) an die Aufnahmevorrichtung des Gerätes anpassen. Um das Filmmaterial im Gerät ab- bzw. rückspulen zu können, muß die Aufnahmevorrichtung auf die Filmrolle schlupffrei Drehmoment übertragen können.

Ein um eine Rollbahn (4) gespannter ringförmiger elastischer Rollkörper (3) wird beim Einstecken des Adapters (1) in die Wickelhülse (8) geklemmt, so daß Adapter (1) und Filmrolle drehfest verbunden werden.

Das Filmmaterial (7) kann im Verarbeitungsgerät störungsfrei von der Rolle entnommen und auf diese rückgespult werden. Der Adapter (1) ist wiederverwendbar. Die Ausführung der Tageslichtverpackung (6) ist unabhängig vom Verarbeitungsgerät und kann einheitlich und kostengünstig hergestellt werden.

## Beschreibung

Die Erfindung bezieht sich auf einen Adapter zur Anpassung einer Filmrolle in Tageslichtverpackung an eine Aufnahmevorrichtung in einem Filmverarbeitungsgerät, umfassend ein in ein offenes Ende einer Wickelhülse steckbares nabenförmiges Anpassungsteil welches einerseits an die Aufnahmevorrichtung ankuppelbar und andererseits durch Einstecken in das offene Ende mit der Wickelhülse verbindbar ist.

Um Filmmaterial, welches spiralförmig um eine Wickelhülse gewickelt ist, in einem Verarbeitungsgerät, beispielsweise einem Belichtungsgerät, verwenden zu können, muß das Filmmaterial im Gerät ab- und wieder rückspulbar sein. Hierzu muß die Aufnahmevorrichtung des Verarbeitungsgerätes auf den Filmwickel ein Drehmoment übertragen können.

Erfolgreich am Markt eingeführt sind sogenannte Tageslichtverpackungen, die einen Filmwechsel im Hellen erlauben. Eine derartige Tageslichtverpackung kann beispielsweise so ausgeführt sein, daß das lichtempfindliche Filmmaterial um eine Wickelhülse, üblicherweise ein Pappkern, gewickelt ist, wobei die Stirnflächen durch Seitenteile und die Mantelfläche durch eine Abdeckfolie vor Lichteinfall geschützt wird. Die Abdeckfolie ist meist breiter als das Filmmaterial. Eine solche Tageslichtverpackung ist beispielsweise aus der deutschen Patentanmeldung 198 30 954 bekannt. Beim Filmwechsel wird diese Tageslichtverpackung von Hand in das Verarbeitungsgerät gelegt und zwischen zwei Aufnahmedorne gespannt. Dann wird die Abdeckfolie teilweise abgewickelt und durch einen lichtdichten Schlitz im Verarbeitungsgerät geführt. Die Abdeckfolie wird vollständig entfernt und das am Schlitz austretende Filmmaterial wird mit dem Fördermechanismus des Verarbeitungsgerätes verbunden. Eine neue Filmrolle ist betriebsbereit.

In manchen Verarbeitungsgeräten ist sowohl axial als auch radial genügend Platz und die Aufnahmevorrichtung ist als Kupplungsteil mit einem Profil ausgebildet. Entsprechend weist die Tageslichtverpackung für diese Geräte ebenfalls ein Profil auf, welches mit dem Profil des Kupplungsteils formschlüssig verbindbar ist. Die Aufnahmevorrichtung und die Verpackung bilden so eine fremdbetätigte Schaltkupplung, die bei Stillstand des Gerätes, z.B. beim Einlegen der Filmrolle, geschaltet wird.

In EP 05 36 608 ist eine Tageslichtverpackung beschrieben, bei der Teile der Verpackung, die Seitenscheiben, im Bereich der Nabe ein Profil aufweisen, welches mit der Aufnahmevorrichtung eines Verarbeitungsgerätes kuppelbar ist. Diese Verpackung hat den Nachteil, daß Teile des Lichtschutzes als Kupplungsteil mit einem Profil entsprechend der Aufnahmevorrichtung im Verarbeitungsgerät ausgeführt werden müssen. Die Lagerhaltung und die Logistik sowie die Entsorgung dieser Seitenscheiben verursachen zusätzliche Kosten.

Durch offenkundige Vorbenutzung ist eine Verpackung bekannt, bei der Seitenteile mit dem oben erwähnten Kupplungsprofil im offenen Ende einer lichtdicht verpackten Filmrolle steckbar angebracht werden. Dadurch ist es möglich, die Verpackung hinsichtlich des Lichtschutzes einheitlich und kostengünstig auszuführen. Die aufsteckbaren Seitenteile, die hier nicht Teil des Lichtschutzes sind, bilden ein wiederverwendbares Zusatzteil zur Verpackung, das nicht jeder Filmrolle beiliegen muß. Es genügt, wenn der Anwender des Filmmaterials, jeweils passend für sein Verarbeitungsgerät, ein Paar aufsteckbare Seitenteile zur Verfügung gestellt bekommt. Die Montage dieser Seitenteile, bei der eine drehfeste Verbindung zwischen Aufnahmevorrichtung und Filmrolle erreicht werden muß, ist aber schwierig. Um eine drehfeste Verbindung herzustellen, weisen die Seitenteile Klemmrippen auf die in die Wickelhülse formschlüssig gepreßt werden. Dies erfordert einen hohen Kraftaufwand und erschwert die Handhabung.

Der Erfindung liegt die Aufgabe zugrunde einen Adapter der eingangs beschriebenen Art anzugeben, der einfach handhabbar ist und eine schlupffreie Drehmomentübertragung zwischen einer Aufnahmevorrichtung und einer Filmrolle ermöglicht. Gelöst wird diese Aufgabe mit den technischen Merkmalen des Patentanspruchs 1.

Der erfindungsgemäße Adapter sieht ein nabenförmiges Anpassungsteil vor, das einerseits mit der Aufnahmevorrichtung kuppelbar und andererseits durch Klemmung eines elastischen Rollkörpers mit der Filmrolle drehfest verbindbar ist. Auf diese Weise entsteht beim Einstecken des Adapters in das offene Ende der Wickelhülse eine Klemmverbindung. Diese Klemmverbindung kann leicht hergestellt und leicht wieder gelöst werden. Der Adapter ist dadurch einfach handhabbar. Die Verbindung ist nahezu verschleißfrei.

Das nabenförmige Anpassungsteil des Adapters weist eine Rollbahn auf um die der elastische Rollkörper gespannt ist. Beim Einstecken wird dieser ringförmige Rollkörner jeweils längs einer Umfangslinie zwischen der Rollbahn und der Zylinderinnenfläche der Wickelhülse geklemmt. Eine sichere Befestigung in einem Pappkern ist auch dann möglich, wenn dessen Innendurchmesser, beispielsweise aufgrund von Herstellungstoleranzen oder Feuchtigkeit, schwankt. Die Aufnahmevorrichtung des Verarbeitungsgerätes kann auf die Filmrolle das Drehmoment ohne Schlupf übertragen. Der Adapter ermöglicht einerseits, daß die Tageslichtverpackung einheitlich und damit kostengünstig ausgeführt werden kann. Andererseits ermöglicht die schlupffreie Drehmomentübertragung eine störungsfreie Verwendung des Filmmaterials in verschiedenen Verarbeitungsgeräten.

Bei einer bevorzugten erfindungsgemäßen Ausbildung ist der elastische Rollkörper als gummielastischer O-Ring ausgeführt und weist eine Shore-Härte von 40 -95, besonders bevorzugt eine Shore-Härte von 60 auf. Durch Klemmung dieses gummielastischen O-Rings läßt sich auf einfache Weise eine kraftschlüssige Verbindung herstellen, die auch bei großen Filmrollen drehfest ist. Die Montage des Adapters erfordert nur eine geringe Einsteckkraft. Ein O-Ring aus Silikon mit einer Shore-Härte von 60 hat sich besonders bewährt, da derartige Rundschnurdichtungen in verschiedenen Abmessungen verfügbar und kostengünstig sind. Günstig ist ferner, daß sich die gummielasische Eigenschaft dieser O-Ringe während der Gebrauchsdauer des Adapters kaum ändert.

Hierbei ist bevorzugt, daß die Rollbahn in einer Ringnut des Anpassungsteils angeordnet ist und der O-Ring beim Einstecken aus einer Anfangsposition entgegen der Einsteckrichtung in eine Endposition rollt. Die Ringnut verhindert, daß der O-Ring vom Anpassungsteil abrollt und verloren geht.

Besonders bevorzugt ist eine Ausführungsform bei der die Rollbahn einen konischen und einen angrenzenden zylindrischen Abschnitt aufweist. Die Montage und Demontage des Adapters wird dadurch erheblich erleichtert. Beim Einstecken in die Wickelhülse rollt der O-Ring aus einer Anfangsposition im konischen Abschnitt in eine Endposition im zylindrischen Abschnitt. Dabei erfährt der O-Ring, der zwischen Rollbahn und Wickelhülse geklemmt wird, entlang des konischen Abschnittes eine zunehmende Pressung. Durch diese Pressung wird dem Wälzkörper eine Formänderungsarbeit zugeführt die längs dieses Abschnittes ebenfalls zunimmt. In der Endposition des Rings entsteht eine Klemmverbindung mit sehr großer Reibkraft. Beim Abnehmen des Adapters tritt eine Entlastung des Wälzkörpers ein und es verringert sich zunehmend die erforderliche Ausziehkraft.

Es ist bevorzugt, daß am Anpassungsteil ein Flansch angeformt ist. Wenn dieser Flansch einen Flanschdurchmesser aufweist der größer als der äußere Durchmesser des Lichtschutzes der Verpackung ist, bildet der Adapter nicht nur einen mechanischen Schutz für die Stirnflächen, sondern auch für die Umfangsfläche der Verpackung. Beispielsweise, wenn die Verpackung samt aufgestecktem Adapter auf eine ebene Fläche gelegt wird, wirkt der angeformte Flansch als Stütze.

Hierbei ist wiederum bevorzugt, daß am Flansch im Bereich des nabenförmigen Teils ein Ansatz angeformt ist, der nach dem Einstecken zwischen der Stirnfläche der Verpackung und dem Flansch einen Abstand bewirkt. Auf diese Weise wird zweierlei erreicht: Beim Rückspulen des Filmmaterials wird verhindert, daß Seitenteile der Verpackung in den Bahnlauf geraten. Beim Öffnen der Tageslichtverpackung, also wenn die Abdeckfolie abgewickelt wird, verhindert der Ansatz am Flansch, daß jene Teile der Abdeckfolie, die den äußeren Rand jedes Seitenteils abdecken, geklemmt werden und das Abwickeln hindern.

Bevorzugt ist auch, daß, in Einsteckrichtung gesehen, der zylindrische Abschnitt eine axiale Länge aufweist, die größer ist als der Querschnittsdurchmesser des O-Rings. Dadurch wird gewährleistet, daß auch bei starker Klemmung der O-Ring stabil in der Endposition liegt.

Die Erfindung wird nachstehend anhand eines bevorzugten Ausführungsbeispiels und zugehörigen Zeichnungen näher erläutert. In diesen zeigen:
- Fig. 1: eine Teilschnittdarstellung eines bevorzugten erfindungsgemäßen Adapters,
- Fig. 2: eine Teilschnittdarstellung einer Tageslichtverpackung,
- Fig. 3: eine Teilschnittdarstellung einer ungeöffneten Tageslichtverpackung mit eingestecktem Adapter,
- Fig. 4: eine Teilschnittdarstellung einer geöffneten Tageslichverpackung mit eingestecktem Adapter,
- Fig. 5: eine schematische Detaildarstellung vor dem Einstecken des Adapters in die Wickelhülse,
- Fig. 6: eine schematische Detaildarstellung nach dem Einstecken des Adapters in die Wickelhülse.

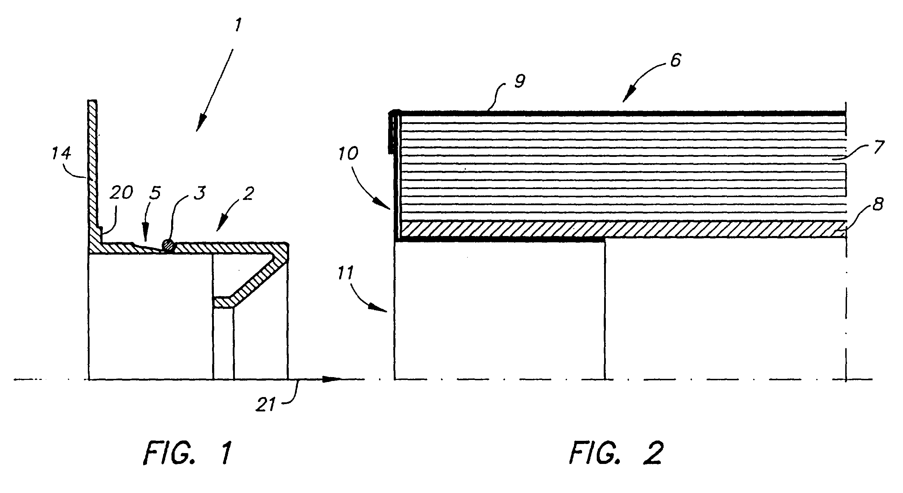

In Fig. 1 ist eine bevorzugte Ausführungsform des erfindungsgemäßen Adapters 1 schematisch in einer Teilschnittdarstellung gezeigt. In dieser Ausführungsform weist das nabenförmige Anpassungsteil 2 eine Ringnut 5 auf in der ein Wälzkörper 3 angeordnet ist. Die Breite der Ringnut 5 ist größer als der halbe Einschubweg des Adapters in die Wickelhülse. Am Flansch 14 ist ein Ansatz 20 angeformt der untenstehend näher erläutert wird. Der Adapter 1 ist entlang eines Einschubweges in Einsteckrichtung 21 in das offene Ende 11 einer Tageslichtverpackung (Fig. 2) einsteckbar.

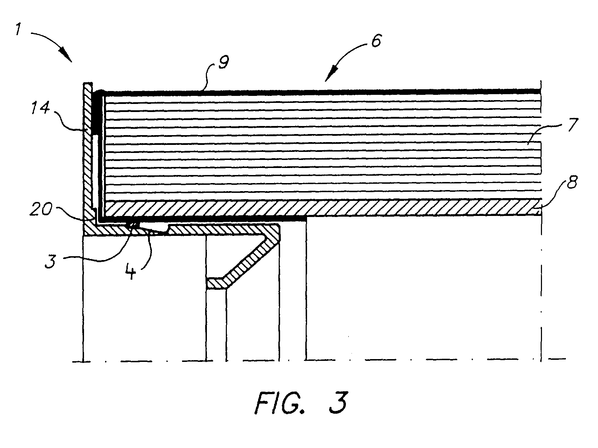

In Fig. 2 ist eine Tageslichtverpackung 6 in einer Teilschnittdarstellung schematisch gezeigt, die für den erfindungsgemäßen Adapter besonders geeignet ist. Eine solche Tageslichtverpackung ist in der deutschen Patentanmeldung 198 30 954 beschrieben. Das lichtempfindliche Material 7 ist spiralförmig um eine Wickelhülse 8 gewickelt und wird durch eine Abdeckfolie 9 und beidseitig angebrachte Seitenabdeckungen vor Lichteinfall geschützt. Wie in der Zeichnung dargestellt, ist die Stirnseite der Filmrolle durch eine Seitenabdeckung 10 abgedeckt, von der ein tubusförmiges Teil in das offene Ende der Wickelhülse 8 ragt und an diese angeformt und geklebt ist. Abdeckfolie und Seitenabdeckung können beispielsweise aus schwarz pigmentierten Kunststoff, beispielsweise aus Polystyrol gefertigt sein. Die Wandstärke des tubusförmigen Teils liegt beispielsweise zwischen 0,15 mm und 0,25 mm. Die Abdeckfolie 9 umhüllt die äußere Umfangsfläche des Filmwickels. Üblicherweise wird etwa die 1,5-fache Umfangslänge des Filmwickels umwickelt. Die Wickelhülse 8 ist üblicherweise ein hohlzylindrischer Kern aus Pappe, kann aber auch ein Kunststoffkern sein. Durch Vergleich mit Fig. 1 ist leicht zu erkennen, daß nach dem Einstecken der O-Ring 3 in eine Endposition gelangt (Fig. 3), in der er zwischen dem Tubus der Wickelhülse und der Rollbahn 4 geklemmt wird. Als Ausführungsbeispiel hat sich für eine Verpackung mit einem Innendurchmesser der Wickelhülse von ca. 70 mm ein Adapter mit einer Ringnut von 17 mm Breite, einem O-Ring aus Silikon mit einem Durchmesser von 2,5 mm und einer Shore-Härte von 60, und einem Einschubweg von etwa 25 mm bewährt.

In Fig. 3 ist in einer Teilschnittdarstellung eine ungeöffnete Tageslichtverpackung 6 bei eingestecktem Adapter 1 dargestellt. Wie in der Zeichnung veranschaulicht wirkt der Ansatz 20 als Abstandshalter zwischen dem Flansch 14 und der Stirnfläche der Filmrolle. Auf diese Weise wird verhindert, daß beim Öffnen der Tageslichtverpackung die Abdeckfolie 9 zwischen dem Flansch 14 und dem spiralförmig gewickelten Filmmaterial 7 eingeklemmt wird.

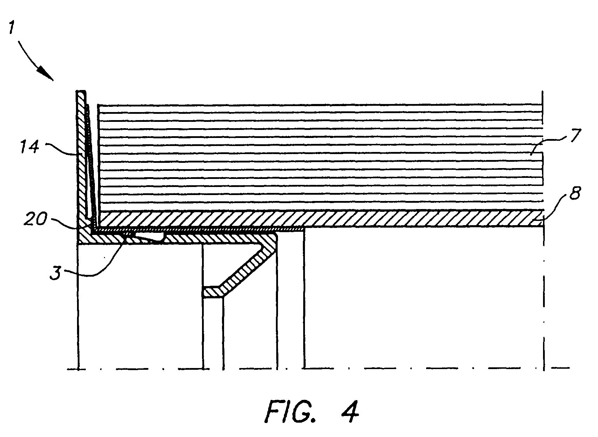

Fig. 4 zeigt in einer Teilschnittdarstellung eine geöffnete Tageslichtverpackung mit eingestecktem Adapter. Wie die Zeichnung veranschaulicht, ist die Stirnfläche der Tageslichtverpackung so ausgeführt, daß sie als Tellerfeder wirkt: Die Tellerfeder ist entspannt wein die Abdeckfolie abgewickelt ist (Fig. 4). Der Ansatz 20 ermöglicht diese Entspannung und gibt den Bahnweg für das lichtempfindliche Material beim Rückspulen frei.

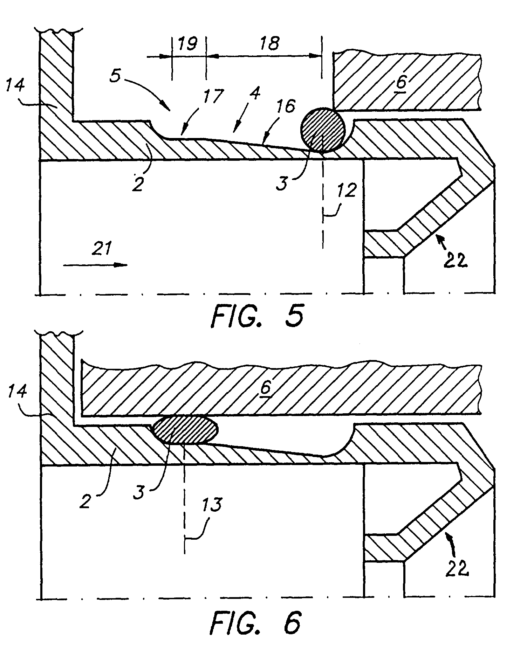

In Fig. 5 und Fig. 6 ist die Klemmung des ringförmigen elastischen Rollkörpers in einem Teilquerschnitt schematisch dargestellt. Der gummielastische O-Ring 3 befindet sich zu Beginn des Einsteckens in einer Anfangsposition 12. Nach vollendeter Montage, also nachdem der Adapter beim Einstecken den Einschubweg zurückgelegt hat, befindet sich der O-Ring in einer Endposition 13. Aus Fig. 5 und Fig. 6 geht deutlich hervor, daß die Anordnung von Adapter, O-Ring und Wickelhülse so gewählt ist, daß es beim Einstecken zu einer Pressung des O-Rings kommt. Der O-Ring, der von der Wickelhülse bzw. äußeren Teilen des Lichtschutzes erfaßt wird, rollt gegen die Einsteekrichtung 21 am konischen Abschnitt 16 der Rollbahn 4 hinauf, Im Anschluß an die konische Rollbahn gelangt der O-Ring in einen zylindrischen Abschnitt 17. Wie aus Fig. 6 zu entnehmen ist, erfährt der O-Ring bei dieser bevorzugten Ausführungsform des Adapters längs des Weges 18 eine zu-nehmende Pressung und in seiner Endposition 13 die größte Klemmung. Fig. 6 zeigt auch, da die Länge des konischen Abschnittes 18 und die Länge des zylindrischen Abschnittes 19 so gewählt ist, daß der Wälzkörper beim Einstecken längs dieses Rollweges rollt und nicht rutscht. Aus Fig. 6 geht auch hervor, daß die Länge des zylindrischen Abschnittes 19 so gewählt ist, daß der Wälzkörper 3 in seiner Endposition 13 stabil auf der Rollbahn 4 aufliegt. Das nabenförmige Anpassungsteil 2 weist ein nicht näher dargestelltes Kupplungsteil 22 auf, welches mit dem nicht dargestellten Aufnahmedorn des Verarbeitungsgerätes formschlüssig in Eingriff zu bringen ist. So bildet der in die Verpackung gesteckte Adapter mit der Aufnahmevorrichtung eines Verarbeitungsgerätes eine Schaltkupplung, die beim Einlegen bzw bei der Entnahme der Rolle geschaltet wird.

Die in Fig. 2, Fig. 3 und Fig. 4 im Teilschnitt dargestellte Tageslichtverpackung ist für den erfindungsgemäßen Adapter besonders geeignet. Der im offenen Ende an die Innenseite der Wickelhülse geklebte Tubus bewirkt eine sichere Klemmung des elastischen Rollkörpers und verhindert zuverlässig ein Durehrutschen der Seitenabdeckung.

Selbstverständlich eignet sich der erfindungsgemäße Adapter auch für andere Tageslichtverpackungen, beispielsweise für eine aus EP 03 50 093 bekannte Verpackung, bei der Innenränder von Endflanschteilen in die offenen Kernenden eingeschlagen und an die Innenseite der Kernenden geklebt sind. Natürlich kann der Wickelkern auch aus Kunststoff ausgeführt sein an dem Endflanschteile geschweißt oder angeformt sind.

## Patentansprüche

1. Adapter zur Anpassung einer Filmrolle in Tageslichtverpackung an eine Aufnahmevorrichtung in einem Filmverarbeitungsgerät, umfassend ein in ein offenes Ende einer Wickelhülse steckbares nabenförmiges Anpassungsteil welches einerseits an die Aufnahmevorrichtung ankuppelbar und andererseits durch Einstecken in das offene Ende mit der Wickelhülse verbindbar ist, dadurch gekennzeichnet, daß am Anpassungsteil (2) ein um eine Rollbahn (4) gespannter ringförmiger elastischer Rollkörper angeordnet ist der beim Einstecken zur Wickelhülse hin liegend durch Klemmung im offenen Ende (11) das Anpassungsteil (2) mit der Wickelhülse (8) drehfest verbindet.

2. Adapter nach Anspruch 1, dadurch gekennzeichnet, daß der elastische Rohkörper als gummielastischer O-Ring (3) ausgeführt ist der eine Shore-Härte von 40 - 95, besonders bevorzugt eine Shore-Härte von 60, aufweist.

3. Adapter nach Anspruch 2 dadurch gekennzeichnet, daß die Rollbahn (4) in einer Ringnut (5) des Anpassungsteils (2) angeordnet ist und der O-Ring (3) beim Einstecken aus einer Anfangsposition (12) gegen die Einsteckrichtung (21) in eine Endposition (13) rollt.

4. Adapter nach Anspruch 3 dadurch gekennzeichnet, daß die Rollbahn (4) einen konischen und einen angrenzenden zylindrischen Abschnitt aufweist (16, 17), der O-Ring beim Einstecken zwischen Rollbahn (4) und Wickelhülse unter zunehmender Pressung aus einer Anfangsposition (12) im konischen Abschnitt (16) längs eines Rollweges in eine Endposition (13) im zylindrischen Abschnitt (17) rollt.

5. Adapter nach einem der vorstehenden Ansprüche dadurch gekennzeichnet, daß am Anpassungsteil (2) ein Flansch (14) angeformt ist der einen Flanschdurchmesser aufweist der bevorzugt größer als ein größter äußerer Durchmesser der Verpackung (6) ist.

6. Adapter nach Anspruch 5 dadurch gekennzeichnet, daß am Flansch (14) ein Ansatz (20) angeformt ist der nach dem Einstecken zwischen Stirnfläche (10) der Verpackung (6) und Flansch (14) einen Abstand bewirkt.

7. Adapter nach Anspruch 4 dadurch gekennzeichnet, daß in Einsteckrichtung gesehen der zylindrische Abschnitt (17) eine axiale Länge (19) aufweist die größer ist als der Querschnittsdurchmesser des O-Rings.
